# EUROPEAN PATENT APPLICATION

(11) **EP 0 892 578 A2**
(43) Date of publication of application: **20.01.1999**
(21) Application number: 98305775.3
(22) Date of filing: 20.07.1998
(51) Int. Cl.: H04Q 11/04

(54) **Cordless telephone (DECT) system capable of providing a data communication service**

(30) Priority: 18.07.1997 KR 9733507
(71) Applicant: Samsung Electronics Co., Ltd., Suwon-City, Kyungi-do (KR)
(72) Inventor: Lim, Yoo-Sun, Ansan-Shi, Kyonggi-Do (KR)
(74) Representative: Ellis, Kate, Dr.

(57) **Abstract**

A DECT system connected to an ISDN provides data as well as voice communication services. The DECT system includes a DECT terminal (313) for transmitting and receiving packet data via a radio link, and a DECT base station (314) for converting the packet data received from the DECT terminal to an ISDN signal to transmit the IDSN signal to the ISDN, and converting a signal received from the ISDN to packet data to transmit the converted packet data to the DECT terminal.

## Description

### Background of the Invention

The present invention relates to a cordless telecommunication system, and more particularly, to a DECT (Digital European Cordless Telecommunication) system.

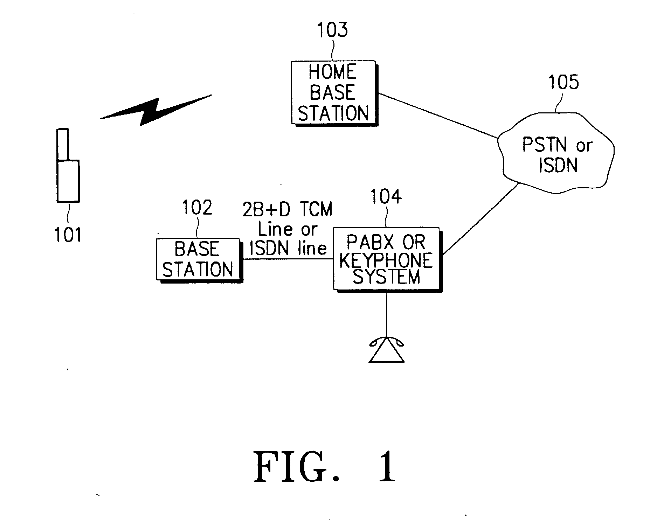

FIG.1 shows a conventional DECT system providing a voice communication service only, and refers to a cordless telephone system used in connection with a PABX (Private Automatic Branch Exchange) or keyphone system 104 and a home base station 103.

Referring to FIG.1, a DECT terminal 101, being an advanced digital cordless telephone for voice communication, is cordlessly connected by a radio link to a DECT base station 102. DECT base station 102 is connected to a PSTN (Public Switched Telephone Network) or ISDN (Integrated Services Digital Network) 105 via a PABX (or a keyphone system) 104, to allow the user of the DECT terminal 101 to talk over the telephone with existing wired subscribers (i.e. PSTN or ISDN subscribers) . Further, the home base station 103 is directly connected to the PSTN (or ISDN) 105, to allow the user of the DECT terminal 101 to talk with the wired subscribers without passing through the PABX or keyphone system 104.

When the user of the DECT terminal 101 tries to make a call to a wired subscriber, the DECT terminal 101 sets up a radio link to the DECT base station 102 or the home base station 103 and then sets up a call via a signalling channel ('D' channel) of the radio link. Upon call set-up, the DECT terminal 101 is connected by radio link to the PSTN (or ISDN) 105 either through the DECT base station 102 or the home base station 103, and performs voice communication via a traffic channel ('B' channel) of the radio link.

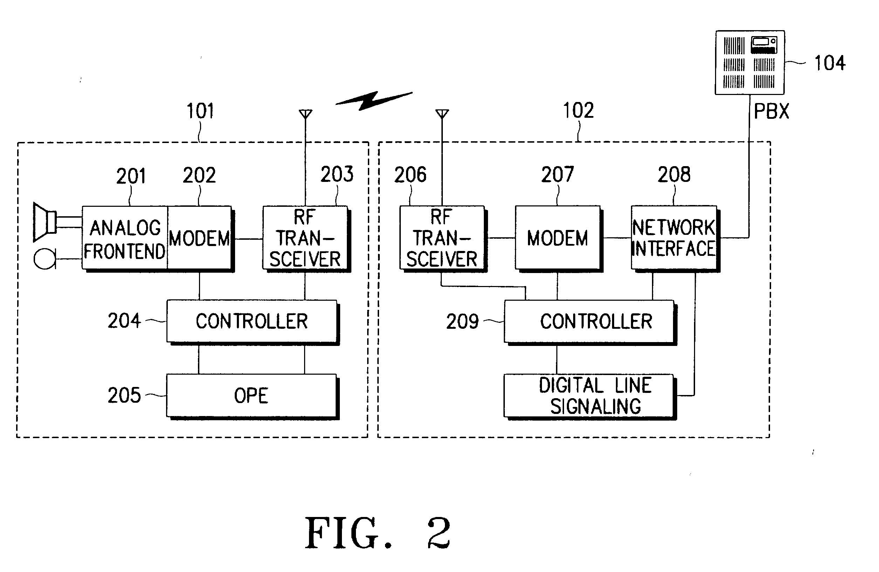

FIG.2 shows a block diagram of a conventional DECT system providing a voice communication service, consisting of the DECT terminal 101 and the DECT base station 102.

Regarding the DECT terminal 101, an analogue front-end processor 201, connected to a microphone (or a receiver), converts an analogue voice signal received from the microphone into ADPCM (adaptive Differential Pulse Code Modulation) data. A MODEM 202 converts the ADPCM data output from the analogue front-end processor 201 to an analogue baseband signal. An RF (Radio Frequency) transceiver 203 converts the analogue baseband signal output from the MODEM 202 to an RF signal and transmits the RF signal to the DECT base station 102 via the radio link. A controller 204 controls the overall operations of the DECT terminal 101. An OPE (Operating Panel Equipment) 205, comprised of a key matrix with a plurality of numeric keys, provides the controller 204 with key data generated by a key operation. Further, the OPE 205 includes an LCD (Liquid Crystal Display) to display the operating states of the DECT terminal 101 under the control of the controller 204.

Next, regarding the DECT base station 102, an RF transceiver 206 down-converts the RF signal received from the DECT terminal 101 via the radio link to a baseband signal. A MODEM 207 demodulates the baseband signal output from the RF transceiver 206 into ADPCM data. A network interface 208 converts the ADPCM data to PCM data and outputs the PCM data to the PABX (or the keyphone system) 104 via the traffic channel (B channel). A digital line signalling device 210 is provided, in communication with network interface 208. A controller 209 controls the overall operations of the DECT base station 102.

As can be appreciated from the foregoing description, the conventional DECT system provides for voice communication only. However, there exists a demand for a DECT system capable of providing a data communication service as well as the voice communication service.

### Summary of the Invention

The present invention provides a telecommunication system for connection to an ISDN (Integrated Services Digital Network), comprising a terminal for transmitting and/or receiving packet data via a radio link; and a base station for converting packet data received from the terminal to a signal for transmission to the ISDN, and/or converting a signal received from the ISDN to packet data for transmission to the terminal.

Preferably, the terminal is a DECT terminal and the base station is a DECT base station.

Preferably, the base station is connected to said ISDN via a U interface.

Preferably, the terminal includes an interface for connection to a computer for providing and/or receiving packet data.

Preferably, the terminal comprises an interface for interfacing data transmission between said terminal and a computer. Preferably, the terminal comprises a packet formatter for packet formatting data input from said interface. Preferably, the terminal comprises a modem for converting packet data output from the packet formatter to an analogue baseband signal. Preferably, the terminal comprises an RF (Radio Frequency) transmitter for converting the analogue baseband signal to an RF signal and transmitting the RF signal to the base station.

Preferably, the terminal comprises an RF (Radio Frequency) receiver for deriving an analogue baseband signal from an RF signal received from the base station. Preferably, the terminal comprises a modem for converting the analogue baseband signal into a data signal. Preferably, the terminal comprises a packet deformatter for packet deformatting the data signal. Preferably, the terminal comprises an interface for interfacing the deformatted data signal to the computer.

Preferably, the base station comprises an RF receiver for down-converting an RF signal received from the terminal into an analogue baseband signal. Preferably, the base station comprises a modem for demodulating the analogue baseband signal into packet data. Preferably, the base station comprises a packet deformatter for deformatting the packet data. Preferably, the base station comprises a network interface for converting said deformatted packet data to an ISDN signal and for sending said ISDN signal.

Preferably, the base station comprises a network interface for producing a data signal from a received ISDN signal. Preferably, the base station comprises a packet formatter for formatting the data signal into packet data. Preferably, the base station comprises a modem for modulating packet data into an analogue baseband signal. Preferably, the base station comprises an RF transmitter for producing an RF signal for transmission to the terminal, from the analogue baseband signal.

In the base station, the packet formatter or deformatter preferably converts packet data from or into PCM (Pulse Code Modulation) data.

In the terminal, packet formatting or deformatting preferably respectively comprises adding or removing header, CRC (Cyclic Redundancy Check) and control data.

The invention also provides a method for operating a telecommunications system for connection to an ISDN, comprising the steps of packet formatting transmission data; transmitting the packet data from a terminal to a base station via a radio link; converting the packet data transmitted to the base station to an ISDN signal; and transmitting the IDSN signal to the ISDN.

Preferably, the method also comprises the step of receiving transmission data from an ISDN, in a base station. Preferably, the method also comprises the step of packet formatting the transmission data; transmitting the packet data to a terminal from the base station via a radio link; and deformatting the packet data transmitted to the terminal.

Preferably, the telecommunications system is a DECT.

Preferably, the present invention provides a cordless telecommunications system capable of providing data communication service in addition to voice communication service, and a method for operating the same.

### Brief Description of the Drawings

The foregoing and other objects, features and advantages to the present invention will become more apparent from the following detailed description of certain embodiments of the invention, given by way of examples only, in conjunction with the accompanying drawings in which:-
FIG.1 is a diagram showing a conventional DECT system, connected to a PSTN or ISDN, for providing a voice communication service only;
FIG.2 is a block diagram of a DECT system consisting of a DECT terminal and a DECT base station of FIG.1;
FIG.3 is a block diagram of a DECT system consisting of a DECT terminal and a DECT base station according to an embodiment of the present invention; and
FIG.4 is a diagram showing the DECT system, connected to an ISDN, for providing the data communication service according to an embodiment of the present invention.

### Detailed Description of the Drawings

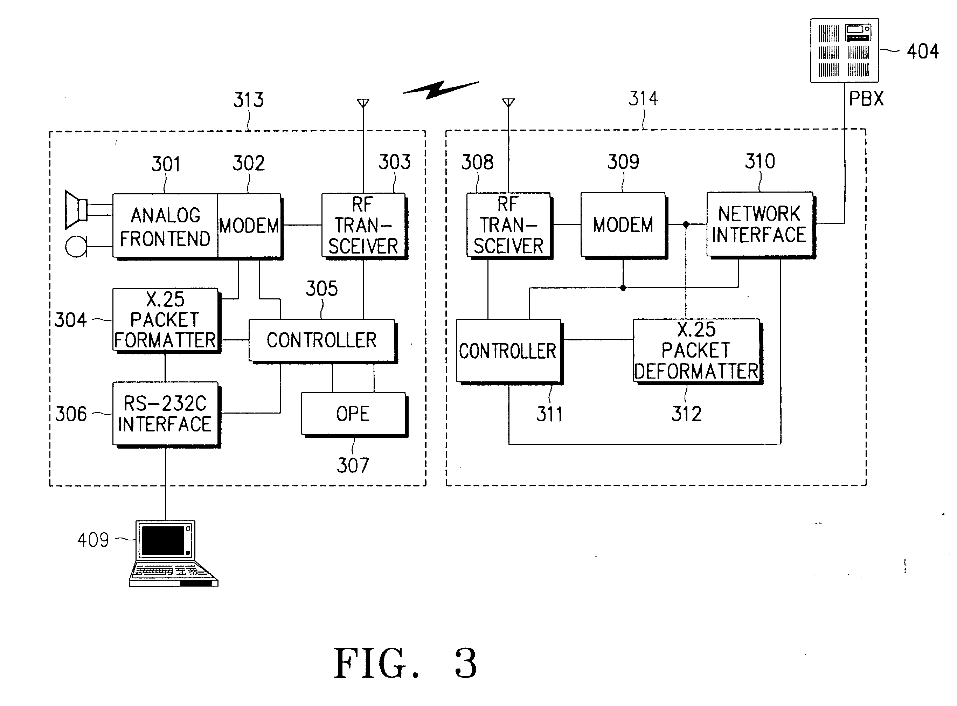

FIG.3 shows a block diagram of a DECT system according to an embodiment of the present invention which can provide a data transmission service. The DECT system consists of a DECT terminal 313 and a DECT base station 314.

First, regarding the DECT terminal 313, a controller 305 controls the overall operations of the DECT terminal 313, including transmission of a call control signal to the DECT base station 314. An analogue front-end processor 301, connected to a microphone (or receiver), converts an analogue voice signal input from the microphone to ADPCM data, where ADPCM refers to a digital coding technique used for the voice signal. An OPE 307, comprising a key matrix with a plurality of numeric keys, provides the controller 305 with key data generated by a key operation. Further, the OPE 307, having an LCD display, displays the operating states of the DECT terminal 313 on the LCD under the control of the controller 305. An RS-232C interface 306 enables data transmission between the DECT terminal 313 and a computer 409 such as a portable or notebook computer. An X.25 packet formatter 304 packet formats the data input from a notebook computer 409 via RS-232C interface 306, that is, packet formatter 304 converts data input from the notebook computer 409 to packet data and adds header, cyclic redundancy check (CRC) and control data. By packet formatting the data, the DECT terminal 313 can readily adjust the packet size to be transmitted and retransmit the data when there occurs a data error in a radio environment. In accordance with the present invention, the data is packet formatted in accordance with an X.25 Standard, under the ITUT (International Telecommunication Union-Telecommunication sector) Recommendation. A MODEM 302 converts the ADPCM data output from the analogue front-end processor 301 and the packet data output from the X.25 packet formatter 304 to analogue signals. An RF transceiver 303 converts the analogue signals input from the MODEM 302 to an RF signal and transmits the RF signal to the DECT base station 314 via a radio link.

Next, regarding the DECT base station 314, an RF transceiver 308 down-converts the RF signal received from the DECT terminal 313 to the baseband signal. A MODEM 309 demodulates the baseband signal output from the RF transceiver 308 into digital data. An X.25 packet deformatter 312 removes header, CRC (Cyclic Redundancy Check) and control data from the output data of the MODEM 309, and converts the remaining, 'pure' data to 64Kbps PCM (pulse code modulated) data in the V.110 format. A network interface 310 convert the PCM data received from the X.25 packet deformatter 312 into the ISDN format, such as a U interface format, and transmits the converted ISDN format data over the traffic channel (B channel) to a PABX or keyphone system 404. The U interface format has a 2B+D structure consisting of two 64Kbps traffic channels and one 16Kbps signalling channel in a time sharing manner. The traffic channels are used for transmission of the voice traffic and the data traffic, and the D channel is used for transmission of the signalling data i.e. the control data.

When the voice data from the DECT terminal 313 is received, the network interface 310 converts received ADPCM data to PCM data and successively converts the PCM data to an ISDN format signal, such as a U interface format signal, and transmits the ISDN format signal via the B channel.

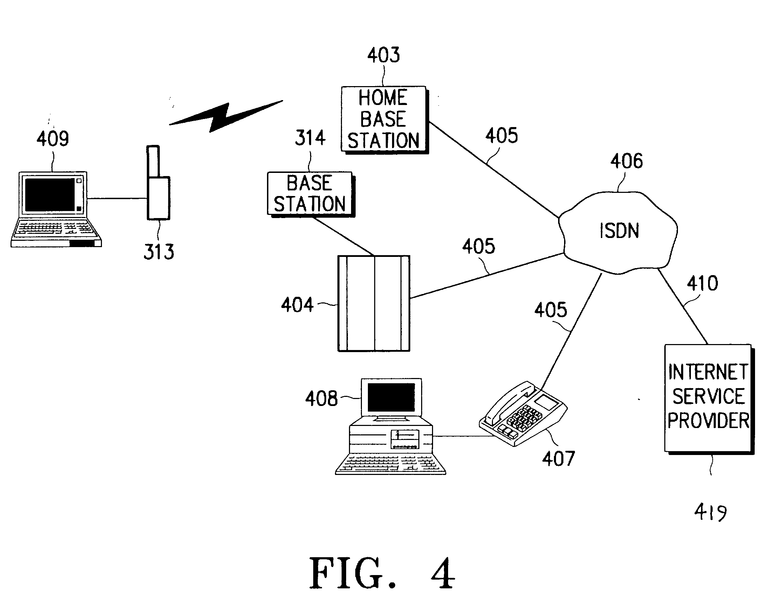

FIG.4 shows a DECT system of the present invention connected to an ISDN 406. Within the DECT terminal 313, the data received from the connected notebook computer 409 is converted to X.25 format data. The MODEM 302 modulates the X.25 format data. The RF transceiver 303 converts the modulated data to an RF signal and transmits the RF signal to the DECT base station 314 (or the home base station 403) via a traffic channel of the radio link.

The DECT base station 314 receives and demodulates the RF signal into a baseband signal, X.25-deformats the baseband signal, and converts the deformatted signal to the V.110 format, which is the standard format of a CCITT (International Telegraph and Telephone Consultative Committee) ISDN MODEM. Within the base station 314, the X.25 format signal in converted to an ISDN format signal by the network interface 310 and is transmitted to the ISDN 406 via PABX 404, through the traffic channel of an ISDN U interface 405. The ISDN line has 2B+D channel structure consisting two traffic channels (2B) for transmitting data and voice traffic and one signalling channel (D) for transmitting call set-up and call control signals. The ISDN 406 is connected to an Internet service provider 419.

FIG. 4 also shows a computer 408 connected to a modem and telephone 407, providing a connection to ISDN 406.

The present invention accordingly provides a cordless telecommunication system, in particular a DECT system, which can process data traffic as well as voice traffic.

While this invention has been described in connection with a particular exemplary embodiment, various modifications and variants of the present invention will be apparent to those skilled in the art.

Although the invention has been described only with reference to the transmission of data from the terminal to the base station and thence to the ISDN, it will be apparent that the system, method and apparatus of the present invention may be operated in the reverse sense, with data being provided by the ISDN to the base station and transmitted to the terminal, thence to the connected computer. Accordingly, a preferred embodiment will include RF transceivers and bi-directional modems in each of terminal and base station. Both X.25 formatter and deformatter should be provided in each of base station and terminal to provide for X.25 formatting and deformatting in either direction. In such an embodiment, data may be transmitted in either or both directions between terminal and base station.

## Claims

1. A telecommunication system for connection to an ISDN (406) (Integrated Services Digital Network), comprising:
a terminal (313) for transmitting and/or receiving packet data via a radio link; and
a base station (314) for converting packet data received from the terminal to a signal for transmission to the ISDN, and/or converting a signal received from the ISDN to packet data for transmission to the terminal.

2. A system according to claim 1 wherein the terminal is a DECT terminal and the base station is a DECT base station.

3. A system as claimed in claim 1 or claim 2, wherein said base station is connected to said ISDN via a U interface.

4. A system according to claim 1 or claim 2 wherein the terminal includes an interface (306) for connection to a computer (409) for providing and/or receiving packet data.

5. A terminal for use in a system as claimed in any preceding claim, wherein said terminal comprises:
- an interface for interfacing data transmission between said terminal and a computer;
- a packet formatter (304) for packet formatting data input - from said interface;
- a modem (302) for converting packet data output from the packet formatter to an analogue baseband signal; and
- an RF (Radio Frequency) transmitter (303) for converting the analogue baseband signal to an RF signal and transmitting the RF signal to the base station.

6. A terminal for use in a system as claimed in any of claims 1-4, or a terminal according to claim 5, wherein said terminal comprises:
an RF (Radio Frequency) receiver (303) for deriving an analogue baseband signal from an RF signal received from the base station;
a modem for converting the analogue baseband signal into a data signal;
a packet deformatter for packet deformatting the data signal; and
an interface for interfacing the deformatted data signal to the computer.

7. A base station for use in a system according to any of claims 1-3 wherein said base station comprises:
an RF receiver (308) for down-converting an RF signal received from the terminal into an analogue baseband signal;
a modem (309) for demodulating the analogue baseband signal into packet data;
a packet deformatter (312) for deformatting the packet data; and
a network interface (310) for converting said deformatted packet data to an ISDN signal and for sending said ISDN signal.

8. A base station for use in a system according to any of claims 1-4, or a base station according to claim 7 wherein said base station comprises:
a network interface for producing a data signal from a received ISDN signal;
a packet formatter for formatting the data signal into packet data;
a modem for modulating packet data into an analogue baseband signal; and
an RF transmitter for producing an RF signal for transmission to the terminal, from the analogue baseband signal.

9. A base station according to claim 7 or claim 8 wherein the packet formatter or deformatter converts packet data from or into PCM (Pulse Code Modulation) data.

10. A method for operating a telecommunications system for connection to an ISDN, comprising the steps of:
packet formatting transmission data;
transmitting the packet data from a terminal to a base station via a radio link;
converting the packet data transmitted to the base station to an ISDN signal; and
transmitting the IDSN signal to the ISDN.

11. A method for operating a telecommunications system for connection to an ISDN, comprising the steps of:
in a base station, receiving transmission data from an ISDN;
packet formatting the transmission data;
transmitting the packet data to a terminal from the base station via a radio link; and
deformatting the packet data transmitted to the terminal.

12. A method according to claim 10 or claim 11 wherein the telecommunications system is a DECT.

13. A terminal according to claim 5 or claim 6, or a base station according to any of claims 7-9, or a method according to any of claims 10-12, wherein packet formatting or deformatting respectively comprises adding or removing header, CRC (Cyclic Redundancy Check) and control data.

14. A telecommunication system for connection to an ISDN (406) (Integrated Services Digital Network) as described herein with reference to figures 3 and/or 4.

15. A terminal as described herein with reference to figures 3 and/or 4.

16. A base station as described herein with reference to figures 3 and/or 4.

17. A method for operating a telecommunications system for connection to an ISDN as described herein with reference to figures 3 and/or 4.
